## Europäisches Patentamt
## European Patent Office
## Office européen des brevets

(11) Veröffentlichungsnummer: **0 163 844**
**B1**

(12) **EUROPÄISCHE PATENTSCHRIFT**

(45) Veröffentlichungstag der Patentschrift: 04.04.90

(21) Anmeldenummer: 85104063.4

(22) Anmeldetag: 03.04.85

(51) Int. Cl.⁵: **F 16 F 13/00,** B 60 K 5/12,
F 16 F 7/10

(54) **Pneumatisches Lager.**

(30) Priorität: 07.06.84 DE 3421136

(43) Veröffentlichungstag der Anmeldung:
**11.12.85 Patentblatt 85/50**

(45) Bekanntmachung des Hinweises auf die
Patenterteilung:
**04.04.90 Patentblatt 90/14**

(84) Benannte Vertragsstaaten:
**FR**

(56) Entgegenhaltungen:
**EP-A-0 044 435**
**EP-A-0 117 139**
**DE-A-2 947 018**
**DE-A-3 009 747**
**DE-A-3 026 878**
**DE-A-3 214 037**
**FR-A-2 496 810**

**PATENT ABSTRACTS OF JAPAN, Band 6, Nr. 45**
**(M-118)923r, 20. März 1982; & JP-A-56 160 219**
**(NISSAN JIDOSHA K.K.) 09-12-1981**
**PATENT ABSTRACTS OF JAPAN, Band 9, Nr. 60**
**(M-364)1783r, 16. März 1985; & JP-A-59 194 141**
**(TOYODA GOSEI K.K.) 02-11-1984**

(73) Patentinhaber: **AUDI AG**
**Auto-Union-Strasse 1 Postfach 220**
**D-8070 Ingolstadt (DE)**

(72) Erfinder: **VAN DEN Boom, Johannes, Dipl.-Ing.**
**Marie-Luise-Fleisser-Strasse 16**
**D-8073 Kösching (DE)**
Erfinder: **Hollerweger, Heinz, Dipl.-Ing.**
**Effnerstrasse 20**
**D-8070 Ingolstadt (DE)**
Erfinder: **Kuipers, Geert, Dipl.-Ing.**
**Am Kirchenweg 1a**
**D-8070 Ingolstadt (DE)**

(74) Vertreter: **Le Vrang, Klaus**
**AUDI AG Postfach 220 Patentabteilung I/EQP**
**D-8070 Ingolstadt (DE)**

Courier Press, Leamington Spa, England.

**Beschreibung**

Die Erfindung betrifft ein pneumatisches Lager zum Einsatz in einem Kraftfahrzeug, insbesondere zur Lagerung einer Brennkraftmaschine. Ein derartiges Lager weist einen Lagerkern auf, der mit dem Brennkraftmaschine verbunden ist und die Schwingungen in das Lager einleitet, sowie ein Widerlager, das karosserieseitig verbunden wird. Aufgabe des Lagers ist es, die von der Brennkraftmaschine ausgehenden Schwingungen aufzufangen, so daß sie nicht auf die Karosserie übertragen werden. In pneumatischen Motorlagern wird dazu mindestens ein Gasvolumen vorgesehen, das die auftretenden Schwingungen absorbiert.

Es sind Lager bekannt, die auf dem Prinzip der Tilgermasse basieren (DE—SO 30 26 878). Ein derartiges Lager weist mindestens eine gasdichte Kammer auf, die Lagerkern und Widerlager miteinander verbindet, sowie eine weich aufgehängte Tilgermasse. Mindestens eine weitere Kammer wird in ihrem Volumen durch die Bewegung der Tilgermasse verändert.

Aus der JP—A 56-160219 ist ein pneumatisches Lager bekannt, dessen dämpfende pneumatische Kammer wahlweise an ein Hilfsvolumen angeschlossen werden kann zur Erzielung eines weicheren Dämpfungsverhaltens. Tilgermassen sind bei diesem Lager nicht vorgesehen.

Die Lagereigenschaften eines derartigen bekannten Lagers sind abgestellt auf einen bestimmten Frequenzgang, wobei bei einer vorgegebenen Frequenz durch die Abstimmung der Lagereigenschaften und der Größe der Tilgermasse eine optimale Tilgung erfolgt.

Es ist jedoch wünschenswert, in einem möglichst weiten Frequenzbereich gute Tilgereigenschaften zu erzielen.

Die Aufgabe der Erfindung ist es, ein pneumatisches Lager zu schaffen, das in einem weiten Frequenzbereich gute akustische Isolierwirkungen hat.

Die Aufgabe wird gelöst durch den Hauptanspruch.

Wesentliches Prinzip der Erfindung ist, daß innerhalb des Lagers mindestens zwei Kammern vorgesehen sind, die jeweils wahlweise miteinander verbunden werden können, und zwar je nach Betriebszustand des Kraftfahrzeuges über Membrane, über Drosseln oder über weite Kanäle. Gleichzeitig läßt sich die Tilgermasse sowie das Ausgleichsvolumen an die Kammern ankoppeln oder abkoppeln, so daß durch die Zusammenschaltung der verschiedenen Kammern und die Ankoppelung der Tilgermasse das Frequenzverhalten des Lagers gezielt beeinflußt werden kann. Damit wird erreicht, daß für den jeweiligen Zustand, d.h. für die zu dämpfende Frequenz, das Lager so beschaltet wird, daß das bestmögliche Frequenztilgungsverhalten erzielt wird.

Als Betriebsparameter, von dem abhängig die verschiedenen Wege im Schaltelement geschaltet werden, kann die Drehzahl der Brennkraftmaschine herangezogen werden.

Eine bevorzugte Ausführung des Schaltelementes ist einem Unteranspruch zu entnehmen.

Im folgenden wird das Lager anhand der Zeichnung detailliert beschrieben. Es zeigen:

Fig. 1 ein erfindungsgemäßes Lager, teilweise aufgeschnitten;

Fig. 2 schematisch eine erste Betriebsart des Lagers;

Fig. 2b das dieser Betriebsart entsprechende mechanische Ersatzmodell;

Fig. 2c die dazu gehörige akustische Übertragungsfunktion;

Fig. 3a das Funktionsschema einer zweiten Betriebsart des erfindungsgemäßen Lagers;

Fig. 3b das dazu gehörige mechanische Ersatzmodell;

Fig. 3c die dazu gehörige akustische Übertragungsfunktion;

Fig. 4a das Funktionsschema einer weiteren Betriebsart des erfindungsgemäßen Lagers;

Fig. 4b das dazu gehörige mechanische Ersatzmodell;

Fig. 4c die dazu gehörige akustische Übertragungsfunktion;

Fig. 5a das Funktionsschema einer weiteren Betriebsart des erfindungsgemäßen Lagers;

Fig. 5b das zugehörige mechanische Ersatzmodell; und

Fig. 5c die entsprechende akustische Übertragungsfunktion.

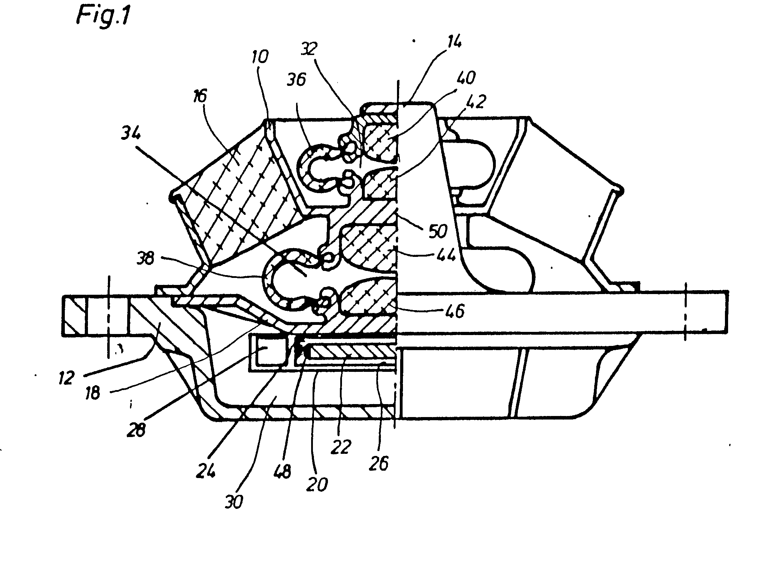

Fig. 1 zeigt den Aufbau eines Lagers, anhand dessen die Erfindung erläutert wird. Zur Darstellung des Innenaufbaus ist auf der linken Hälfte in Fig. 1 des Lager im Schnitt dargestellt.

Ein Lagerkern 10 nimmt die von einer zu lagernden Brennkraftmaschine ausgehenden Schwingungen auf und überträgt sie auf eine Wand 50.

Karosserieseitig ist das Lager mit seinem Widerlager 12 angeschlossen, das im unteren Teil tassenförmig zur Bildung einer großvolumigen Kammer 30 ausgebildet ist und an der Außenseite einen Bügel besitzt, der zu einem Bauteil 14 führt. Das Bauteil 14 bildet die Wand einer ersten Kammern 32, deren gegenüberliegende Wand von einer Wandung 50 gebildet wird, die mit dem lagerkern 10 verbunden ist.

Die Wand 50 bildet gleichzeitig die Wandung für eine zweite Kammer 34, deren gegenüberliegende Wand 18 ebenfalls mit dem Widerlager 12 starr verbunden ist. Lagerkern 10 und Widerlager 12 sind außerdem über ein Gummielement 16 verbunden, das ebenfalls Federungseigenschaften hat und insbesondere Lagerkern 10 und Widerlager 12 zueinander in radialer Richtung festlegt.

Die Kammer 32 besitzt in ihrem Innern zwei Gummielemente 40 und 42, die durch Einstellung des Druckes in der Kammer aufeinander zu oder voneinander weg bewegbar sind, da die Seitenwandung 36 durch ein formweiches Gummiteil gebildet wird. Je nachdem, inwieweit der in der Kammer 32 aufgebaute Gasdruck entweichen kann, wirkt die Kammer 32 als Gasdruckfeder mit harten oder weichen Eigenschaften.

Gleiches gilt für die Kammer 34, die ebenfalls Gummielemente 44 und 46 in ihrem Innern besitzt, die aufeinander zu oder voneinander weg bewegbar sind, da die Seitenwandung 38 ebenfalls aus einem formweichen Gummiteil besteht. Auch die Kammer 34 trägt zur Härte oder zur Weichheit des Lagers bei.

Wesentlich ist, daß die Kammer 32, die in etwa zylinderförmig ausgebildet ist, in ihrer wirksamen Kriesfläche kleiner ist als die ebenfalls zylinderförmig ausgebildete Kammer 34. Durch die unterschiedliche Größe der beiden pneumatischen Kammern sind die Kammern 32 und 34, wenn sie untereinander verbunden sind, in der Lage, gewisse statische Lagereigenschaften aufzubauen und somit das Gummielement 16 in seiner Wirkung zu unterstützen.

Mit der Wand 18, die mit dem Widerlager 12 verbunden ist und die Kammer 34 auf ihrer einen Seite begrenzt, ist starr ein scheibenförmiger, im Innern hohler Körper 20 verbunden. Der Körper 20 trägt in seinem Innern entlang des Umfanges einen Kanal 28, der zwei radial einwärts liegende, axial übereinander liegende Kammern 24 und 26 miteinander verbindet. Die Kammern 24 und 26 sind voneinander pneumatisch getrennt über eine Tilgermasse 22, die entlang ihres Umfanges mit einem Gummiteil 48 elastisch aufgehängt ist, das eine geringe Schubsteifigkeit, aber eine große Volumensteifigkeit aufweist. Die Tilgermasse 22 kann somit frei schwingen, wodurch jeweils die eine Kammer der Kammern 24 und 26 in ihrem Volumen verriogert wird, während in gleicher Weise die andere der beiden Kammern in ihrem Volumen vergroßert wird. Die Stärke der Ankopplung der Tilgermasse 22 an die feste Wandung 20 und somit über die Wandung 18 an das Widerlager 12 wird bestimmt durch den Gasdruck bzw. durch die pneumatischen Eigenschaften in den Kammern 24 und 26.

Es wird nun ein Schaltelement vorgesehen, das über Leitungen mit der Kammer 32 und der Kammer 34 sowie mit der Kammer 24 und der Kammer 26 verbunden ist. Weiterhin ist an dieses Schaltelement ein großes Gasvolumen 30 angebunden, das von dem tassenförmigen Aufbau des Widerlagers 12 eingeschlossen wird.

Des Schaltelement kann beispielsweise ein Ventilkörper sein, in dem ein Drehschieber, in der Art eines Drei- oder Mehrwegeventiles in seinen verschiedenen Rotationsstellungen die einzelnen Zuleitungen wunschweise miteinander verbindet oder sperrt. Integriert in diesen Drehschieber sien können weiterhin eine Membran und eine Drossel.

Die Drossel kann beispielsweise durch einen porösen Körper gebildet werden, die Membran ist eine nachgiebige Matte aus elastomerem Material, die bei kleinen Auslenkungen eine schwindend geringe Federkonstante besitzt, während bei größeren Auslenkungen beispielsweise durch einen mechanischen Anschlag die Membran nicht weiter bewegt werden kann, so daß in diesem Augeblick die Federkonstante gegen unendlich geht.

Wie in den folgenden Figuren dargestellt wird, wird dür die einzelnen Betriebszustände eine unterschiedliche Beschaltung der Kammern untereinander über freie Durchgänge, über Drossel oder über Membran vorgenommen, wodurch die einzelnen Stellungen des Schaltelementes vorgegeben sind.

Selbstverständlich est es ebenfalls denkbar, statt eines Schaltelements mit einem Rotationskörper mehrere wahlweise öffen- und schließbare Ventile vorzusehen, die beispielsweise elektrisch über Solenoide angesteuert werden.

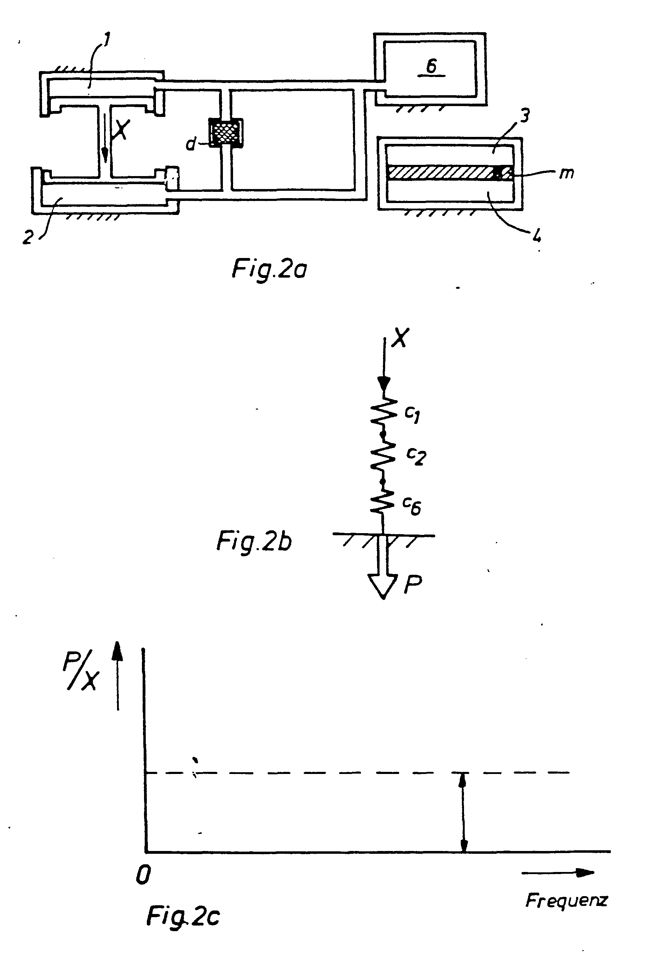

In Fig. 2a ist eine erste Betriebsart des erfindungsgemäßen Lagers dargestellt. Hier wie in den folgenden Figuren entspricht der mit 1 bezeichnete Raum der Kammer 32, der mit 2 bezeichnete Raum der Kammer 34, der mit 3 bezeichnete Raum der Kammer 24, der mit 4 bezeichnete Raum der Kammer 26, und der mit 6 bezeichnete Raum der Kammer 30. Eine jeweils vorgesehene Drossel d ist schematisch als Sieb dargestellt, die Membran t ist ebenfalls schematisch dargestellt. Die Tilgermasse ist mit m bezeichnet, wobei die Drosselverbindung 28 zwischen den Kammern 24 und 26 in der Tilgermasse eingezeichnet ist.

In der ersten Betriebsart sind Raum 1 und Raum 2 miteinander und gleichzeitig mit einem verhältnismäßig großem Luftraum 6 verbunden. Dadurch entsteht eine reine Federwirkung mit weichen Eigenschaften, wobei die drei Luftraumsteifigkeiten 1, 2 und 6 in Serie geschaltet sind. Die effektive Hubkolbenfläche entspricht dabei der Differenz der wirksamen Flächen in Luftraum 1 und Luftraum 2.

Fig. 2b zeigt das entsprechende mechanische Ersatzschaltbild, mit c1, c2 und c6 sind die Federwirkungen der Räume 1, 2 und 6 dargestellt.

In Fig. 2c ist die akustische Übertragungsfunktion dargestellt. Da die Drossel d wirkungslos geschaltet ist und die Federeigenschaften sich nur aus den Eigenschaften der drei hintereinandergeschalteten Gasdruckfedern c1, c2 und c6 zusammensetzen, entspricht die dynamische Steifigkeit des Lagers der statischen Steifigkeit, wie durch die gestrichelte Linie dargestellt.

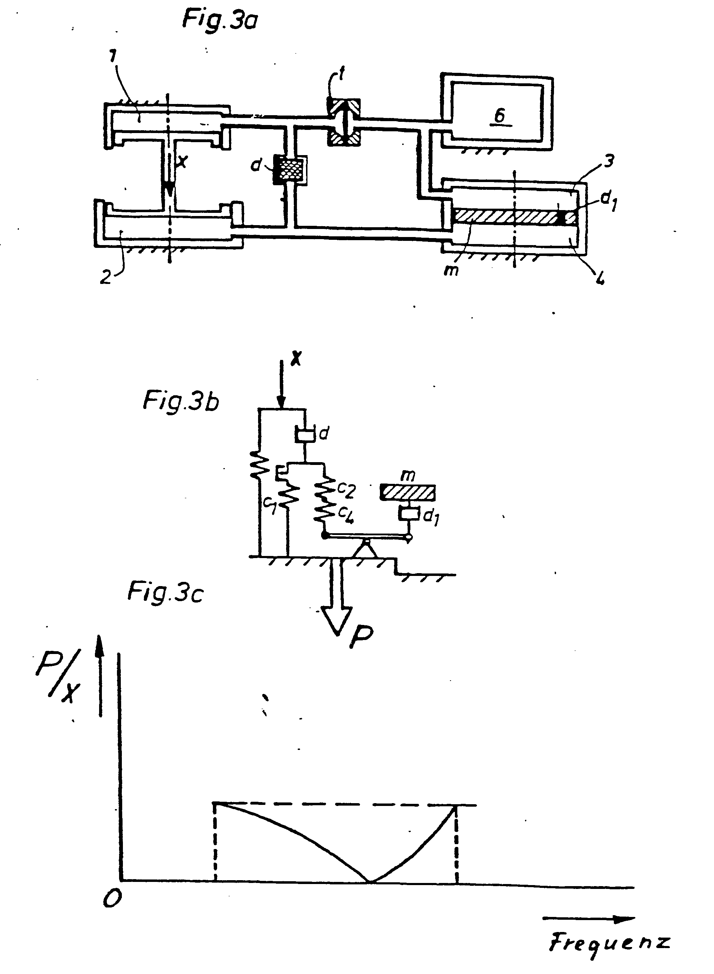

In Fig. 3a ist eine weitere Betriebsart des erfindungsgemäßen Lagers dargestellt, durch eine Kopplung der Räume 2 und 4 entsteht das Prinzip der gegenschwingenden Masse, wie es im mechanischen Ersatzmodell in Fig. 3b dargestellt ist.

Im niederfrequenten Bereich, etwa unterhalb von 20 Hz, ist zusätzlich ein Dämpfungssystem über die Verbindungsdrossel vorhanden, wobei die Ankopplung des Raumes 1 noch über einen amplitudenabhängigen Druckausgleich im großen Raum 6 verfügt.

Im hochfrequenten akustischen Bereich ist der Luftstrom über die Drossel d erheblich geringer, so daß das reine gegenschwingende Massensystem entsteht. Die Schwingmasse verfügt über eine sehr kleine Drosselstelle, die eine quasi statischen Druckausgleich im System ermöglicht. Diese Drosselstelle $d_1$ ist ebenfalls hochfrequent als blockiert zu betrachten.

Damit ergibt sich das Übertragungsverhalten, das in Fig. 3c dargestellt ist, wobei die Kurve nur für den hier unteressierenden Frequenzbereich aufgetragen ist, da außerhalb dieses Frequenzbereichs die Kurve keine Eigenschaften aufweist, die wesentlichen besser gegenüber den statischen Eigenschaften sind.

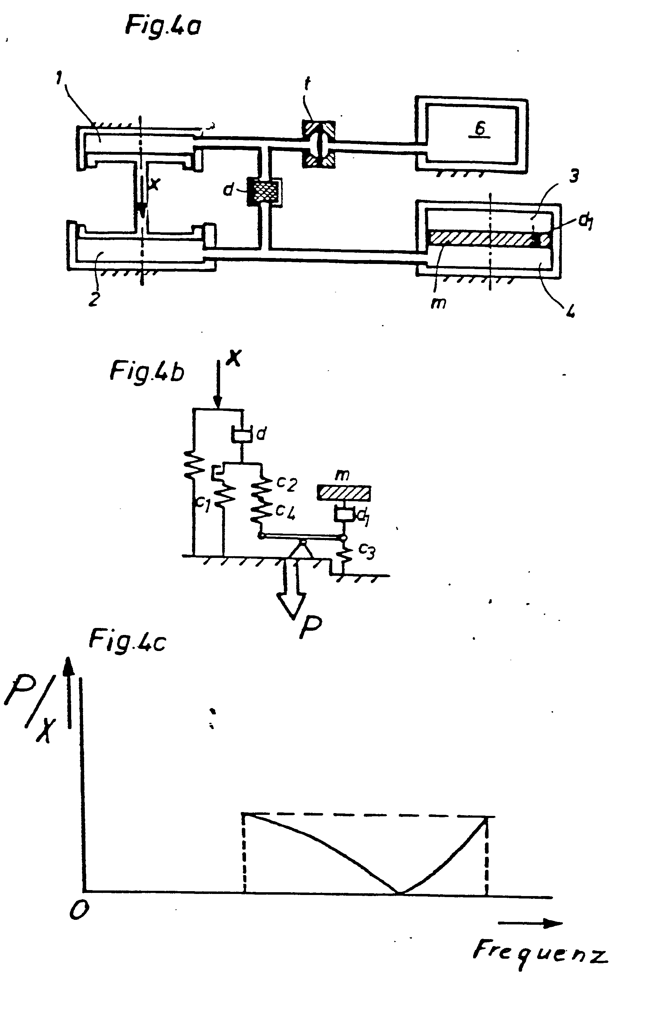

In Fig. 4a ist im Gegensatz zu Fig. 3a der Raum 3 nicht mehr weich zu Raum 6 gekoppelt, so daß im mechanischen Ersatzmodell eine Feder c3 entsteht, welche eine höherfrequente Tilgungslage des Systems, im Verleich zu der in Fig. 3 dargestellten Beschaltung, ergibt.

Der Vergleich zwischen Fig. 3b und Fig. 4b zeigt, daß nunmehr auch der Raum 3 als Feder wirkt, da der dort sich bei Verkleinerung des Raumes 3 aufbauende Druck nicht mehr zum verhältnismäßig großvolumigen Raum 6 abbauen kann.

Die zugehörige Übertragungsfunktion in Fig. 4c zeigt das gleiche Verhalten wie in Fig. 3c, ist lediglich in Richtung zu höheren Frequenzen hin verschoben.

In Fig. 5a ist eine weitere Beschaltung der Räume vorgeschlagen, hier ist Raum 1 über eine Drossel mit Raum 2 verbunden und gleichzeitig an Raum 4 angeschlossen. Raum 3 ist mit Raum 6 verbunden und gleichzeitig über die Membran an Raum 2 angeschlossen. Durch die Kopplung von Raum 1 und Raum 4 entsteht ein Tilgersystem, das in seiner Tilgungsfrequenzlage, wie auch bei den vorigen Betriebsarten, mit von den parallelen Grundsteifigkeiten, also von dem Gummiblock 16, bestimmt wird. Die Tilgungsfrequenz läßt sich stufenweise oder kontinuierlich durch Zuschaltung von weiterem Luftraum zu Raum 4 verändern.

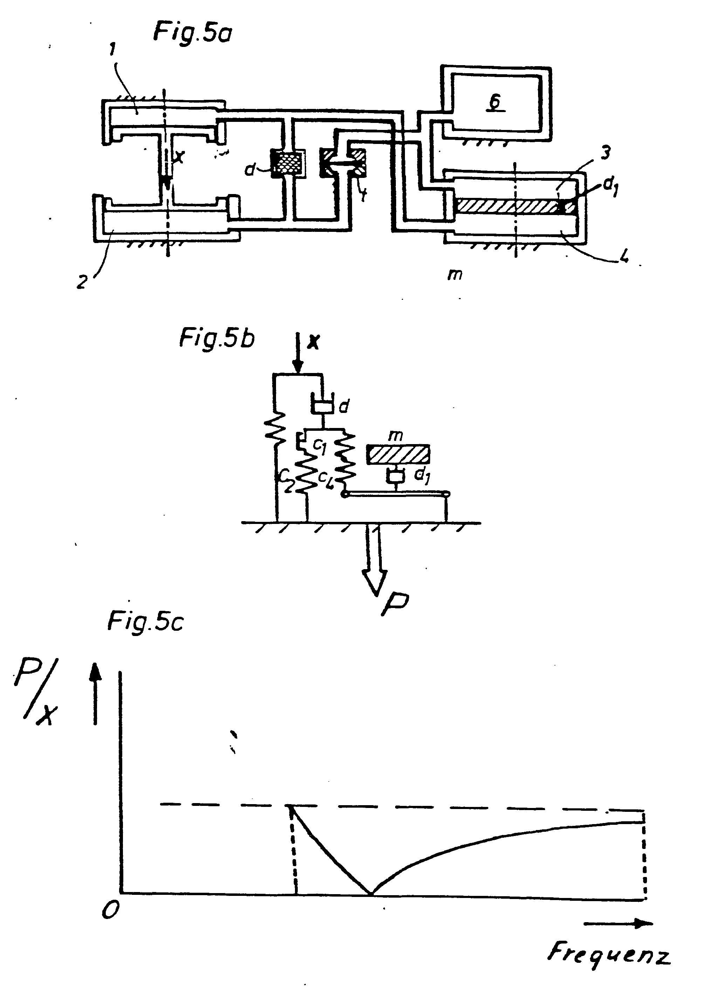

Fig. 5b zeigt wiederum das mechanische Ersatzmodell für die Beschaltung nach Fig. 5a, Fig. 5c zeigt das akustische Übertragungsverhalten der Beschaltung nach Fig. 5a.

Erfindungsgemäß ist vorgesehen, durch das Schaltelement jeweils die für den vorgegebenen Frequenzbereich günstigste Betriebsart auszusuchen, so daß mit steigender Frequenz das Lager umgeschaltet wird von der Betriebsart nach Fig. 2a zur Betriebsart nach Fig. 3a, dann zur Betriebsart nach Fig. 4a und schließlich zur Betriebsart nach Fig. 5a. Die Umschaltung kann dabei durch die Drehzahl des Motors gesteuert werden, da diese die auftretenden Frequenzen bestimmt.

Es soll darauf hingewiesen werden, daß das Lager auch in umgekehrter Einbaurichtung verwendet werden kann, der Lagerkern 10 wird dann mit der Karosserie und das Widerlager 12 sowie die komplette Tilgeranordnung 22, 24, 26 mit der Motorseite verbunden.

## Patentansprüche

1. Pneumatisches Lager zum Einsatz in einem Kraftfahrzeug mit Brennkraftmaschine, mit
   (1) einem Lagerkern (10),
   (2) einem Widerlager (12),
   (3) einer ersten gasdichten Kammer (32, 1), die durch eine Relativbewegung von Lagerkern und Widerlager volumenveränderbar ist, und die über eine Drossel (d) mit einer zweiten gasdichten Kammer (34, 2) in Verbindung steht, und
   (4) einer weich aufgehängten Tilgermasse (22), und mindestens einer weiteren Kammer (24, 26, 3, 4), deren Volumen durch die Bewegung der Tilgermasse veränderbar ist, gekennzeichnet durch
   (5) eine Ausgleichskammer (6, 30) größeren Volumens,
   (6) Schaltelemente, die die Kammern (1, 2, 3, 4, 6) wahlweise über Membranen (t) oder über Kanäle miteinander verbinden oder voneinander trennen,
   (7) wobei in Abhängigkeit von Betriebsparametern des Kraftfahrzeuges aus folgenden Verbindungsmöglichkeiten ausgewählt wird:
   a) die erste und zweite Kammer (32, 34, 1, 2) sind über Kanäle direkt miteinander verbunden und an die Ausgleichskammer (30, 6) angeschlossen,
   b) die erste und zweite Kammer (32, 34, 1, 2) sind über die Drossel (d) miteinander verbunden, die Ausgleichkammer (30, 6) ist über eine Membran (t) mit der ersten Kammer (32, 1) verbunden, während die zweite Kammer (34, 2) über Kanäle mit der der Tilgermasse (22) zugeordneten Kammer (24, 26, 3, 4) verbunden ist, wobei die Druckänderungen in der Ausgleichskammer (30, 6) an die Tilgermassebewegung gekoppelt sind,
   c) die erste und zweite Kammer (32, 34, 1, 2) sind über die Drossel (d) miteinander verbunden, die Ausgleichkammer (30, 6) ist über eine Membran (t) mit der ersten Kammer (32, 1) verbunden, während die zweite Kammer (34, 2) über Kanäle mit der der Tilgermasse (22) zugeordneten Kammer (4) verbunden ist,
   d) die erste und zweite Kammer (32, 34, 1, 2) sind über die Drossel (d) miteinander verbunden, die erste Kammer (32, 1) ist über Kanäle mit der der Tilgermasse (22) zugeordneten Kammer (4) verbunden, die Ausgleichskammer (30, 6) ist über eine Membran (t) mit der zweiten Kammer (34, 2) verbunden, wobei die Druckänderungen in der Ausgleichskammer (30, 6) an die Tilgermassebewegung gekoppelt sind.

2. Lager nach Anspruch 1, dadurch gekennzeichnet, daß die Betriebsparameter des Kraftfahrzeuges die Drehzahl der Brennkaftmaschine umfassen.

3. Lager nach Anspruch 1 oder 2, dadurch gekennzeichnet, daß die Schaltelemente ein Mehrwegeventil umfassen, dessen verdrehbarer Ventilkörper die Kanäle zwischen den Kammern je nach Stellung öffnet oder schließt.

## Revendications

1. Support pneumatique utilisable dans un véhicule automobile avec moteur à combustion interne, comportant
   (1) un noyau de support (10),

(2) un contre-appui (12),

(3) une première chambre étanche au gaz (32; 1), dont le volume peut être modifié par mouvement relatif du noyau et du contre-appui du support et qui est reliée par l'intermédiaire d'un étranglement (d) à une seconde chambre étanche au gaz (34; 2), et

(4) une masse d'amortissement (22) suspendue de façon souple, et au moins une autre chambre (24, 26; 3, 4), dont le volume peut être modifié par le mouvement de la masse d'amortissement, caractérisé par

(5) une chambre d'équilibrage (6, 30) de grande volume,

(6) des éléments de commutation, qui relient entre elles ou séparent l'une de l'autre les chambres (1, 2, 3, 4, 6) sélectivement par l'intermédiaire de membranes (t) ou par l'intermédiaire de canaux,

(7) et en ce que, en fonction de paramètres de fonctionnement du véhicule automobile, une sélection est faite parmi les possibilités de liaison suivantes:

a) la première et la seconde chambre (32, 34; 1, 2) sont reliées, par des canaux, directement l'une à l'autre et à la chambre d'équilibrage (30; 6),

b) la première et la seconde chambre (32, 34; 1, 2) sont reliées entre elles par l'intermédiaire de l'étranglement (d), la chambre d'équilibrage (30; 6) est reliée par l'intermédiaire d'une membrane (t) à la première chambre (32; 1), tandis que la seconde chambre (34; 2) est reliée par des canaux à la chambre (24, 26; 3, 4) associée à la masse d'amortissement (22), les variations de pression dans la chambre d'équilibrage (30, 6) étant couplées au mouvement de la masse d'amortissement,

c) la première et la seconde chambre (32, 34; 1, 2) sont reliées entre elles par l'intermédiaire de l'étranglement (d), la chambre d'équilibrage (30; 6) est reliée à la première chambre (32; 1) par l'intermédiaire d'une membrane (t), tandis que la seconde chambre (34; 2) est reliée, par des canaux, à la chambre (4) associée à la masse d'amortissement (22), et

d) la première et la seconde chambre (32, 34; 1, 2) sont reliée entre elles par l'intermédiaire de l'étranglement (d), la première chambre (32; 1) est reliée, par des canaux, à la chambre (4) associée à la masse d'amortissement (22), la chambre d'équilibrage (30; 6) est reliée par l'intermédiaire d'une membrane (t) à la seconde chambre (34; 2), les variations de pression dans la chambre d'équilibrage (30; 6) étant couplées au mouvement de la masse d'amortissement.

2. Support selon la revendication 1, caractérisé en ce que les paramètres de fonctionnement du véhicule automobile comprennent la vitesse de rotation du moteur à combustion interne.

3. Support selon la revendication 1 ou 2, caractérisé en ce que les éléments de commutation comportent un distributeur à plusieurs voies, dont le corps de distribution rotatif assure, en fonction de sa position, l'ouverture ou la fermeture des canaux entre les chambres.

## Claims

1. Pneumatic bearing for use in a motor vehicle having an internal-combustion engine, with

(1) a bearing cone (10),

(2) an abutment (2),

(3) a first gas-tight chamber (32, 1) which is variable in volume by a relative movement of bearing core and abutment, and which is connected via a throttle element (d) to a second gas-tight chamber (34, 2), and

(4) a soft-suspended suppression material mass (22) and at least one further chamber (24, 26, 3, 4) whose volume is adapted to be varied by the movement of the suppression mass, characterised by

(5) a compensation chamber (6, 30) of relatively large volume,

(6) control elements whereby the chambers (1, 2, 3, 4, 6) are selectively connected to one another or separated from one another by means of diaphragms (t) or ducts,

(7) a selection being made from the following connection possibilities in dependence on operating parameters of the motor vehicle:

a) the first and second chambers (32, 34, 1, 2) are connected directly to one another via ducts, and connected to the compensation chamber (30, 6),

b) the first and second chambers (32, 34, 1, 2) are connected to one another via the throttle element (d), the compensation chamber (30, 6) is connected via a diaphragm (t) to the first chamber (32, 1), whilst the second chamber (34, 2) is connected via ducts to the chamber (24, 26, 3, 4) associated with the suppression mass (22), the pressure variations in the compensation chamber (30, 6) being coupled to the suppression mass movement,

c) the first and second chambers (32, 34, 1, 2) are connected to one another via the throttle element (d), the compensation chamber (30, 6) is connected via a diaphragm (t) to the first chamber (32, 1), whilst the second chamber (34, 2) is connected via ducts to the chamber (4) associated with the suppression mass (22),

d) the first and second chambers (32, 34, 1, 2) are connected to one another via the throttle element (d), the first chamber (32, 1) is connected via ducts to the chamber (4) associated with the suppression mass (22), the compensation chamber (30, 6) is connected via a diaphragm (t) to the second chamber (34, 2), the pressure variations in the compensation chamber (30, 6) being coupled to the movement of the suppression mass.

2. Bearing according to claim 1, characterised in that the operating parameters of the motor vehicle include the speed of revolution of the internal-combustion engine.

3. Bearing according to claim 1 or 2, characterised in that the control elements comprise a multi-way valve whose rotatable valve member opens or closes, depending on its respective position, the ducts between the chambers.

EP 0 163 844 B1

Fig.1

1

Fig.2a

Fig.2b

Fig.2c

**Fig.3a**

**Fig.3b**

**Fig.3c**

$P/x$

$O$

Frequenz

**Fig.4a**

**Fig.4b**

**Fig.4c**

4

Fig.5a

Fig.5b

Fig.5c

$P/x$

$O$

Frequenz